# EUROPEAN PATENT APPLICATION

(11) **EP 2 608 001 A1**
(43) Date of publication of application: **26.06.2013**
(21) Application number: 11290608.6
(22) Date of filing: 23.12.2011
(51) Int. Cl.: G06F 3/048

(54) **Method of and device for validation of a user command for controlling and appliction**

(71) Applicant: France Télécom, 75015 Paris (FR)
(72) Inventor: Faidy, Diane, W14 9SR London (GB); Verdi, Rajinder, BR2 8NE Bromley (GB); Riera, Julien, 75015 Paris (FR)
(74) Representative: Regimbeau

(57) **Abstract**

A portable electronic communication device comprising a display screen; a graphical user interface displayed on the display screen and comprising; a first graphical object automatically movable along a path across at least part of the display screen; movement of the first graphical object to a predetermined region of the path being indicative of validation of a user command for controlling an application; and a second graphical object displayed on the predetermined path of the first graphical object such that the second graphical object appears to obstruct movement of the first graphical object along the path to the predetermined region, the second object being movable on the display screen, in response to a user input via the graphical user interface: from a first state, indicative of the user command being unvalidated, in which the second graphical object obstructs movement of the first graphical object to the predetermined region, to a second state, i ndicative of the user command being validated, in which passage of the first graphical object to the predetermined region is enabled; and sensor means configured to determine the second state being attained; an application processor configured to execute the user command in response to detection of the second state being attained.

## Description

### Field of the Invention

The present invention relates in general to a method and device for validating a user command for controlling an application executing on a portable electronic device.

### Background of the Invention

As the number of software applications and services installed on portable electronic devices steadily increases and the applications become more and more complex, the design of user interfaces enabling ease of user interaction and enhancing user experience is becoming more and more challenging. Moreover, for applications where validations of commands have important consequences, it is becoming more important to ensure that command validations are not triggered inadvertently.

The present invention has been devised with the foregoing in mind.

### Summary of the Invention

Accordingly, a first aspect of the invention provides a portable electronic communication device comprising a display screen; a graphical user interface displayed on the display screen and comprising a first graphical object automatically movable along a path across at least part of the display screen; movement of the first graphical object to a predetermined region of the path being indicative of validation of a user command for controlling an application; and a second graphical object displayed on the path of the first graphical object such that the second graphical object appears to obstruct movement of the first graphical object along the path to the predetermined region, the second object being movable, on the display screen in response to a user input via the graphical user interface: from a first state, indicative of the user command being first graphical object to the predetermined region, to a second state, indicative of the user command being validated, in which passage of the first graphical object to the predetermined region is enabled; and sensor means configured to determine the second state being attained; an application processor configured to execute the user command in response to detection of the second state being attained.

The method and devices according to aspects of the invention help to facilitate user interaction and to enhance user experience for execution of user commands. Moreover, a more secure form of validation may be implemented.

In an embodiment, the sensor means is configured to detect of at least one of movement of the second graphical object in response to the user input and automatic movement of the first graphical object on the display screen.

In an embodiment, the sensor means is configured to determine at least one of location of the second graphical interface object on the display screen and location of the first graphical object on the display screen.

In an embodiment, the display screen is a touch sensitive display operable to detect one or more user contact gestures with the surface of the touch screen display and, the second object being a user interface graphical object movable on the display screen by one or more user contact gestures. The user contact gesture may be directly with a user digit such as a finger or thumb, or indirectly by means of a pointer object such as a stylus pen etc. In other embodiments, the second object may be moved by other user control means such as for example a joystick type control, a control wheel, track ball etc.

In an embodiment, the sensor means is configured to detect user contact of a region of the display screen corresponding to the second graphical interface object and a user drag gesture across the display screen from the region of the display screen corresponding to the second graphical interface object to a region of the display screen away from the path of the first graphical object.

In an embodiment, the second graphical object comprises at least two parts, separation of the at least two parts by a user contact gesture enabling passage of the first graphical object along its path between the at least two parts of the second graphical object towards the predetermined region.

In an embodiment, separation of the at least two parts is activated by user drag gestures, each user drag gesture moving a respective part of the second graphical object out of the path of the first graphical object. In an embodiment, the user drag gestures are simultaneous.

In an embodiment, the application processor is configured to enable wireless transmission of data representative of the user command from the portable electronic device to a remote server once validation of the command has been detected

In an embodiment, the user command is representative of an agreement to pay for a product or service

According to a second aspect of the invention, there is provided a computer implemented method for validating a user command for controlling an application, the method comprising displaying on a display screen of a portable electronic device a graphical user interface comprising: a first graphical object automatically movable along a path across at least part of the display screen; movement of the first object to a predetermined region of the path being indicative of validation of a user command for controlling an application; a second graphical object displayed on the path of the first graphical object such that the second object appears to obstruct movement of the first graphical object along the path to the predetermined region; receiving a user input for moving the second graphical object from a first state, indicative of the user command being unvalidated, in which the second graphical object obstructs movement of the first graphical object to the predetermined region; to a second state indicative of the user command being validated in which passage of the first object to the predetermined region is enabled; and detecting the second state being attained; executing the user command, by an application processor, in response to detection of the second state being attained.

In an embodiment, the display screen is a touch sensitive display operable to detect one or more user contact gestures with the surface of the touch screen display and, the method comprises detecting one or more user contact gestures for moving the second graphical object on the display screen.

In an embodiment, the method includes detecting user contact of a region of the display screen corresponding to the second graphical interface object and a user drag gesture across the display screen from the region of the display screen corresponding to the second graphical interface object to a region of the display screen away from the path of the first graphical object.

In an embodiment, the second graphical object comprises at least two parts, the method comprising detecting user contact gestures enabling separation of the at least two parts for passage of the first graphical object along its path between the at least two parts of the second graphical object towards the predetermined region.

At least parts of methods according to the invention may be computer implemented. The methods may be implemented in software on a programmable apparatus. They may also be implemented solely in hardware or in software, or in a combination thereof.

Since some parts of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### Brief Description of the Drawings

Embodiments of the invention will now be described, by way of example only, and with reference to the following drawings in which:-
Figure 1 is a schematic diagram of a network in which one or more embodiments of the invention may be implemented;
Figure 2 is a schematic diagram of a portable electronic communication device according to at least one embodiment of the invention;
Figure 3 is a block diagram indicating some components of a portable electronic communication device according to at least one embodiment of the invention; and
Figures 4 to 7 are schematic block diagrams illustrating a graphical user interface and user interaction according to a particular embodiment of the invention.

### Detailed description

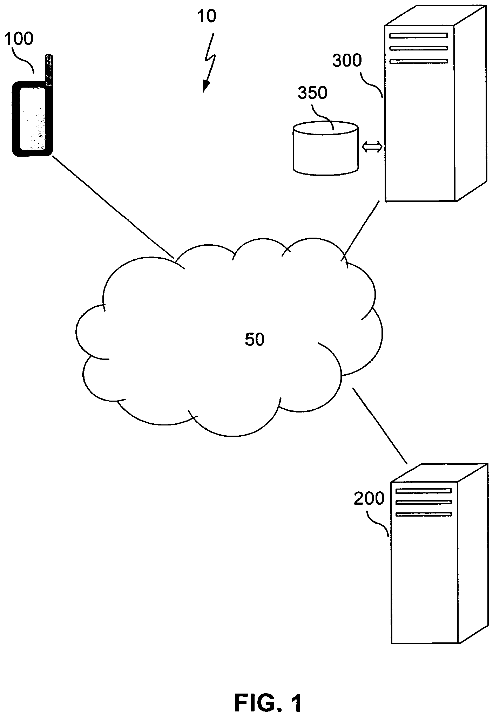

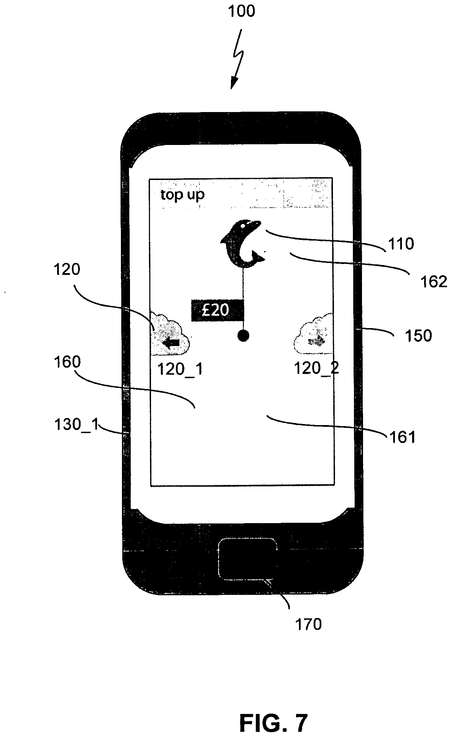

Embodiments of the invention will be described with reference to the Figures 1 to 7.

Figure 1 illustrates some of the main components of a data communication system 10 in which one or more embodiments of the invention may be implemented. The system 10 includes a data communication network 50 to which is connectable to portable electronic communication device 100 configured to implement a method according to one or more embodiments of the invention, an application provider server 200 as well as a service provider server 300 and database 350.

The portable electronic communication device 100 communicates with remote devices such as the application provider server 200 and the service provider server 300 by means of the data communication network 50. The data communication network 50 may be a wireless network such as a 3G type network, may comprise a combination of fixed and wireless networks.

Application provider server 200 is configured to exchange data with an associated application executing on portable electronic communication device 100. The service provider server 300 is configured to communicate with the application provider server for the management of financial transactions related to the application and accesses data concerning user profiles and financial data stored in database 350. The application provider server 200 and the service provider server 300 may communicate with one another by means of fixed and/or wireless networks.

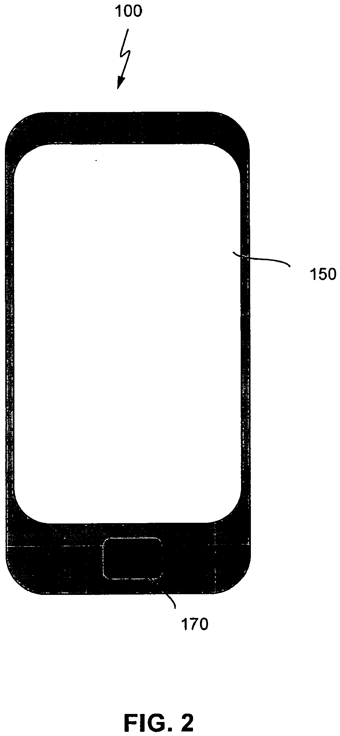

Figure 2 schematically illustrates a non-limiting example of a portable electronic communication device 100 according to an embodiment of the invention. The portable electronic device 100 is a wireless communication device and operates as a multifunction device supporting a range of applications such as a telephony application, instant messaging applications such as a short message service (SMS) application, multimedia message service (MMS) and internet based message exchange services; an email application, a web browsing application a social networking application, a digital camera application, a digital music and/or video player application, a geographical locating application. The portable electronic communication device 100 comprises a touch sensitive screen 150 provided with a graphical user interface (GUI) for enabling a user to operate the applications of the portable electronic communication device 100, as well as various physical buttons 170 such as a home or menu button or an on/off control button.

The touch sensitive screen arrangement 150 (referred to hereafter as touch screen) is provided with a touch sensitive surface operatively connected with a sensor or a plurality of sensors that detect user contact with the touch sensitive screen and provide signals indicative of user contact gestures on the screen based on haptic and/or tactile contact. The touch screen 150 may be configured for single and/or multipoint sensing. The touch screen 150 with a contact processor 152 enable detection of a user contact with the screen and the conversion of the detected contact into a user interaction signal for controlling an application. Examples of touch screen technology include liquid crystal displays (LCD), Light Emitting Polymer display (LPD) for example. It will be appreciated that any suitable touch screen technology enabling user contact with the surface of the screen 150 to be detected and converted into an exploitable signal may be used, for example touch sensing technologies based on capacitive, resistive, infrared, surface acoustic wave technology, pressure sensing, optical sensing proximity sensor arrays etc.

The user contact gesture or event detected may include direct user contact with the touch screen 150 by a digit (finger or thumb) gesture of the user such as finger contact, removal of finger contact, an opening or closing pinch gesture, a swipe gesture, a slide gesture, a tap gesture, a tap and hold gesture, a drag gesture etc. In some embodiments more accurate stylus based user contact may be used.

The graphical user interface includes user interface objects displayed on the touch sensitive screen 150 which may include objects in the form of icons or images representing the various applications executable on the portable electronic device 150. These displayed objects may be manipulated by the user manipulations mentioned above. Other user interface objects include keypads such as soft keyboards enabling a user to input characters including letters, symbols and numbers for execution of applications, soft control pads for providing control, windows, menus, cursors, scroll bars, dialogue boxes etc.

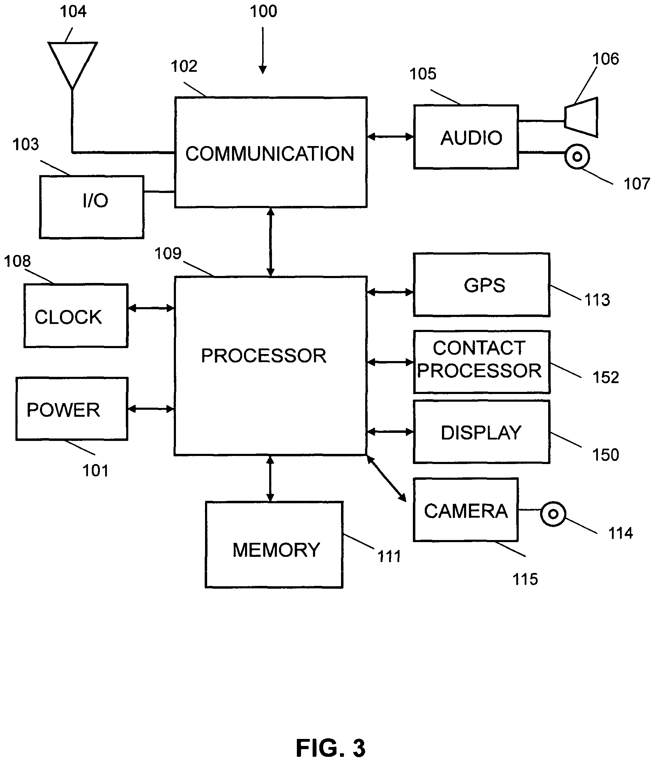

Figure 3 illustrates some of the main components of the portable electronic communication device 100 including a power system 101 for powering the various components of the device. The power system 101 may include one or more power sources, such as for example a rechargeable battery and a power management module. The power management module may include a power failure detection circuit, a power converter or inverter, a power status indicator and any other suitable component for the generation, management and distribution of power in a portable electronic communication device.

The portable electronic device 100 further includes a communication module 102 for enabling communication with one or more external devices by means of one or more external input/output (I/O) ports 103 and an antenna assembly 104 provided with RF circuitry for the transmission and reception of wireless RF signals. The I/O port may be for example a universal serial bus (USB) type port or any other type of port enabling the portable electronic communication device 100 to be connected to one or more external devices

The portable electronic device 100 also includes audio circuitry 105 provided with a speaker 106 and a microphone 107 for providing telephony communication functions; a clock 108; a digital camera 115 provided with an image sensor 114 for capturing still and/or video images and a global positioning system (GPS) 113 for determining location of the device. At least one memory 111 is provided for storing software code of applications executable on the portable electronic communication device 100 and data for use by the portable electronic communication device 100. By way of example the memory 111 may include one or more memory circuits including non-volatile memory circuits (EEPROM, FLASH etc.), Read only Memory (ROM), Random Access memory (RAM), hard disk drive or the like.

Contact processor 152 is operatively coupled to the touch screen 150 to detect user contact with the touch screen 150 and perform a function related to user contact with the touch screen 150 such as detecting if contact has occurred, where contact has occurred, if contact has occurred and been removed, if there has been movement of the contact across the screen etc in order to determine user contact gestures as mentioned above such as user digit contact, removal of user digit contact, an opening or closing pinch gesture, a swipe gesture, a slide gesture, a tap gesture, a tap and hold gesture, a drag gesture etc.

The wireless communication device may include further application modules or instructions stored as program code in memory 111 for providing a variety of functions. Such modules may include an operating system, a graphics module for rendering and displaying graphics on the touch screen 150, a text input module for providing soft key boards on the touch screen150 for entering text, an email client module, an instant messaging (IM) module for transmitting instant messages such as telephony based messages including Short Message Service (SMS) messages, or Multi Media Service messages (MMS) or internet based instant messages; a music and/or video player module, an internet browser module, widget modules and other such modules for providing functions of a multi-function portable electronic device. The portable electronic communication device 100 is provided, in use, with a Subscriber Identity Module SIM card (not shown) for identification. The applications of the portable electronic communication device 100 are executed by processor 109.

While in the non-limiting example illustrated in Figures 2 and 3 the portable electronic communication device 100 is a wireless multifunction mobile telephone, often referred to as a smart phone, it will be appreciated that the portable electronic communication device may be any type of communication processing device such as a personal digital assistant, portable laptop or a fixed computer terminal.

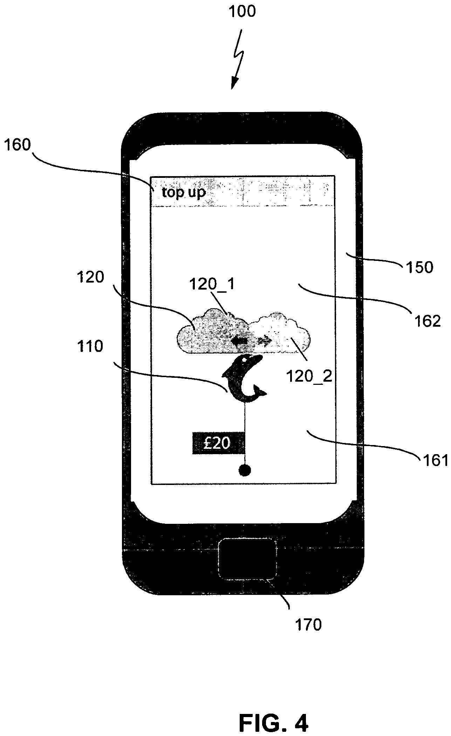

A method of validating a user command for controlling an application executing on the portable electronic communication device 100 will now be described with reference to Figures 4 to 7.

With reference to Figure 4 a graphical user interface 160 associated with an application executing on the portable electronic communication device 100 is displayed on the touch screen 150 of the portable electronic communication device 100. The application in this exemplary embodiment of the invention relates to an application for topping up credit on the telephone contract associated with the SIM card of the user. The graphical user interface (guy) 160 includes a first graphical object 110 and a second graphical interface object 120. The first graphical object is configured to automatically move across the touch screen 150 in the absence of obstructions on a predetermined path across the touch screen 150. In this embodiment the first graphical object 110 is configured to move, when unobstructed, in a vertical direction from a first region 161 of the graphical user interface 160 to a second region 162 of the graphically user interface located vertically above the first region 161. The first graphical object 110 in this particular embodiment takes the form of a balloon in the shape of a dolphin which has an attached label displaying a monetary value, in this example 20 GBP, which represents the monetary value by which the user can top up the credit of his telephone account. The second graphical interface object 120 is movable by a user contact gesture on the touch screen 150 so that it no longer obstructs the predetermined path of movement of the first graphical object 110 and allows the first graphical object to move from the first region of the screen 161 to the second region of the screen 162.

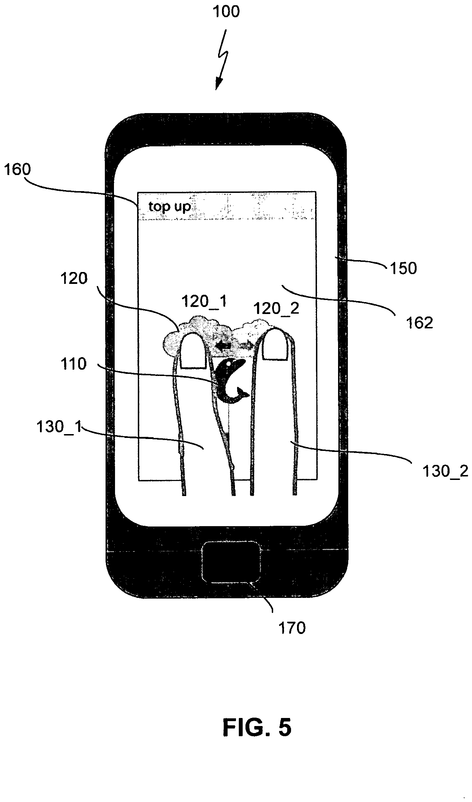

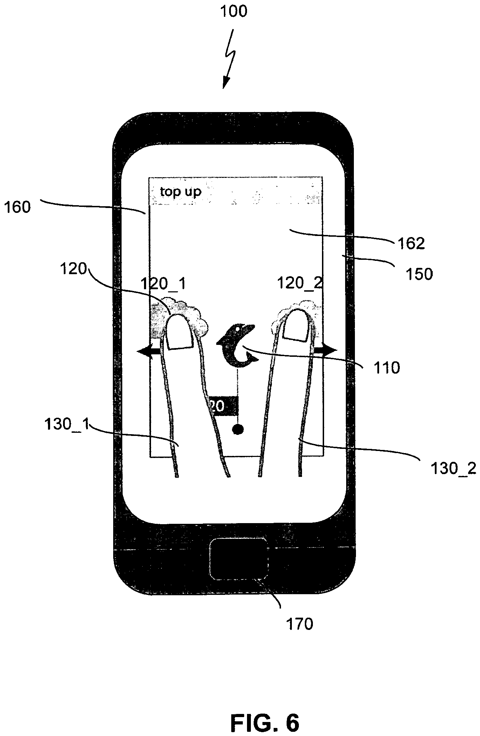

In this particular embodiment of the invention, the second graphical interface object 120 is provided in the form of a cloud assembly made up of two parts (clouds) 120_1 and 120_2 separable from one another by a user contact gesture on the touch screen 150 enabling the first graphical object 121 to pass between the two separate parts 120_1 and 120_2 to move along its path from the first region of the screen 161 to the second region of the screen 162. As illustrated in Figure 5, the two separate parts 120_1 and 120 2 of the second graphical interface object 120 are separable from one another, laterally, by using two digits of the user (two fingers or a finger and thumb of the user) in an open pinch drag movement, for example in which each digit simultaneously contacts a respective separate part 120_1 and 120 2 and drags the respective part 120_1 or 120_2 away from the other part 120_2 or 120_1; the user digits (two fingers in this example) 130_1 and 130_2 moving in a lateral direction across the touch screen 150 towards the edges of the touch screen 150 as illustrated in Figure 6. When the separate parts 120_1 and 120_2 of the second graphical interface object are sufficiently apart to enable passage of the first graphical object, the first graphical object moves from the first region 160_1 to the second region of the application display 160 along the path. Once the first graphical object 110 reaches the second region 162 of the graphical user interface 160 the user command of adding a monetary value of 20GBP to the account of the user is executed by the corresponding application module. In this case the application module receives a signal from the contact processor 152 indicating a validation signal. Data is then transmitted by means of the communication module 102 to remote application server 200 when then communicates with service provider server 300 to enable the financial transaction to be performed. A message may then be displayed on the touch screen 150 by the graphical module to display a confirmation to the user

Although the present invention has been described hereinabove with reference to specific embodiments, the present invention is not limited to the specific embodiments, and modifications will be apparent to a skilled person in the art which lie within the scope of the present invention.

For instance, while the foregoing examples have been explained with respect to an application for topping up credit to operate the portable electronic communication device for communication purposes it will be appreciated that the method may be applied to other executable applications, such as for example sending an email. In such an example the first graphical object may represent an envelope and the second graphical interface object may be positioned to obstruct movement of the envelope towards a recipient until the second graphical object is moved to enable the envelope to move along a predetermined path representative of a path towards the recipient of the email. Other applications may be envisaged, in particular applications which execute solely on the electronic portable communication device 100 and which do not require communication with a remote server or other device.

Moreover, while the previous embodiments have been described with respect to user digit contact manipulation of a touch screen type display, it will be appreciated that in further embodiments of the invention the graphical objects may be controlled with a stylus type device on a touch sensitive screen or by a user control device of the portable electronic device separate to the screen itself such as a joystick type control, a control wheel, track ball etc.

The method and devices according to embodiments of the invention help facilitate user interaction and to enhance user experience for execution of user commands. Moreover, a more secure form of validation may be implemented.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A portable electronic communication device comprising a display screen;
a graphical user interface displayed on the display screen and comprising:
a first graphical object automatically movable along a path across at least part of the display screen; movement of the first graphical object to a predetermined region of the path being indicative of validation of a user command for controlling an application; and
a second graphical object displayed on the path of the first graphical object such that the second graphical object appears to obstruct movement of the first graphical object along the path to the predetermined region,
the second object being movable on the display screen, in response to a user input via the graphical user interface:
from a first state, indicative of the user command being unvalidated, in which the second graphical object obstructs movement of the first graphical object to the predetermined region,
to a second state, indicative of the user command being validated, in which passage of the first graphical object to the predetermined region is enabled; the device further comprising
sensor means configured to determine the second state being attained; and
an application processor configured to execute the user command in response to detection of the second state being attained.

2. A device according to claim 1 wherein the sensor means is configured to detect of at least one of movement of the second graphical object in response to the user input and automatic movement of the first graphical object on the display screen.

3. A device according to claim 1 or 2, wherein the sensor means is configured to determine at least one of location of the second graphical interface object on the display screen and location of the first graphical object on the display screen.

4. A device according to any preceding claim wherein the display screen is a touch sensitive display operable to detect one or more user contact gestures with the surface of the touch screen display and, the second object being a user interface graphical object movable on the display screen by one or more user contact gestures.

5. A device according to claim 4 wherein the sensor means is configured to detect user contact of a region of the display screen corresponding to the second graphical interface object and a user drag gesture across the display screen from the region of the display screen corresponding to the second graphical interface object to a region of the display screen away from the path of the first graphical object.

6. A device according to claim 4 or 5 wherein the second graphical object comprises at least two parts, separation of the at least two parts by a user contact gesture enabling passage of the first graphical object along its path between the at least two parts of the second graphical object towards the predetermined region.

7. A device according to claim 6 wherein separation of the at least two parts is activated by user drag gestures, each user drag gesture moving a respective part of the second graphical object out of the path of the first graphical object

8. A device according to claim 7 wherein the user drag gestures are simultaneous.

9. A device according to any preceding claim wherein the application processor is configured to enable wireless transmission of data representative of the user command from the portable electronic device to a remote server once validation of the command has been detected

10. A device according to claim 9 wherein the user command is representative of an agreement to pay for a product or service

11. A computer implemented method for validating a user command for controlling an application, the method comprising
displaying on a display screen of a portable electronic device a graphical user interface comprising:
a first graphical object automatically movable along a path across at least part of the display screen; movement of the first object to a predetermined region of the path being indicative of validation of a user command for controlling an application;
a second graphical object displayed on the path of the first graphical object such that the second object appears to obstruct movement of the first graphical object along the path to the predetermined region,
receiving a user input for moving the second graphical object
from a first state, indicative of the user command being unvalidated, in which the second graphical object obstructs movement of the first graphical object to the predetermined region;
to a second state indicative of the user command being validated in which passage of the first object to the predetermined region is enabled; and
detecting the second state being attained;
executing the user command, by an application processor, in response to detection of the second state being attained.

12. A method according to claim 11 wherein the display screen is a touch sensitive display operable to detect one or more user contact gestures with the surface of the touch screen display and, the method comprises detecting one or more user contact gestures for moving the second graphical object on the display screen.

13. A method according to claim 12 comprising detecting user contact of a region of the display screen corresponding to the second graphical interface object and a user drag gesture across the display screen from the region of the display screen corresponding to the second graphical interface object to a region of the display screen away from the path of the first graphical object.

14. A method according to claim 12 or 13 wherein the second graphical object comprises at least two parts, the method comprising detecting user contact gestures enabling separation of the at least two parts for passage of the first graphical object along its path between the at least two parts of the second graphical object towards the predetermined region.

15. A computer program product for a data-processing device, the computer program product comprising a set of instructions which, when loaded into the data-processing device, causes the device to perform the steps of the method as claimed in any of claims 11 to 14.
